# EUROPEAN PATENT APPLICATION

(11) **EP 4 629 319 A1**
(43) Date of publication of application: **08.10.2025**
(21) Application number: 25161570.4
(22) Date of filing: 04.03.2025
(51) Int. Cl.: H01M 4/133, H01M 4/134, H01M 4/36, H01M 4/587, H01M 10/04, H01M 10/0525, H01M 10/0587, H01M 4/02

(54) **ELECTRODE ASSEMBLY AND RECHARGEABLE BATTERY WITH THE SAME**

(30) Priority: 25.03.2024 KR 20240040535
(71) Applicant: SAMSUNG SDI CO., LTD., Yongin-si, Gyeonggi-do 17084 (KR)
(72) Inventor: DOO, JAEGYUN, 17084 Yongin-si, Gyeonggi-do (KR); JUNG, WONIL, 17084 Yongin-si, Gyeonggi-do (KR); CHOI, WOOSUNG, 17084 Yongin-si, Gyeonggi-do (KR)
(74) Representative: Gulde & Partner

(57) **Abstract**

An electrode assembly includes a separator, a first electrode and a second electrode stacked and wound with the separator between the first electrode and the second electrode. The first electrode includes a first substrate and a first composite layer disposed on the first substrate. The first composite layer is divided into at least two regions along a length direction of the first substrate. At least two regions of the first composite layer have different active material compositions.

## Description

### BACKGROUND

### 1. Field

The present disclosure relates to a rechargeable battery, and more specifically, to a rechargeable battery having a wound electrode assembly.

### 2. Description of the Related Art

Rechargeable batteries are used for a variety of purposes, including as a power source for small electronic devices such as mobile phones and laptop computers, and as a power source for driving motors in transportation vehicles such as electric vehicles and hybrid vehicles. The rechargeable battery may include a wound electrode assembly. The wound electrode assembly includes a positive electrode and a negative electrode with a separator between the positive electrode and the negative electrode and that are wound together.

In general, the negative electrode undergoes a volumetric change in which the volume increases when charging and decreases when discharging. The wound electrode assembly shows a relatively large volume change mainly in an inner winding part as charging and discharging progresses, and reaction degradation may occur mainly in the inner winding part. Recently, the increase in silicon (Si) content in negative active materials for high-capacity realization has resulted in large volumetric changes in the negative electrode, which can lead to deformation of the electrode assembly and cracking of the substrate.

### SUMMARY

The present disclosure relates to various embodiments of an electrode assembly configured to reduce deformation of an inner winding part and the occurrence of cracks in the substrate, and a rechargeable battery with the electrode assembly.

The electrode assembly according to an embodiment includes a separator, a first electrode, and a second electrode. The first electrode and the second electrode are stacked and wound with the separator between the first electrode and the second electrode. The first electrode comprises a first substrate and a first composite layer disposed on the first substrate. The first composite layer is divided into at least two regions along a length direction of the first substrate. The at least two regions of the first composite layer have different active material compositions.

The first substrate may comprise an inner-side end and an outer-side end. A silicon content of the active material of the at least two regions may decrease in a direction toward the inner-side end. The at least two regions may comprise artificial graphite and natural graphite. A content of the artificial graphite may increase and a content of the natural graphite may decrease in the direction toward the inner-side end.

The at least two regions may comprise a first region proximate to the inner-side end and a second region proximate to the outer-side end. The active material of the second region may contain less than approximately 10 wt% of silicon. The active material of the first region may not contain silicon or may contain a silicon content lower than that of the second region. The active material of the first region may comprise artificial graphite, and the active material in the second region may comprise natural graphite.

The electrode assembly may further comprise a middle uncoated region between the first region and the second region. The first electrode may comprise a first lead tab attached to the middle uncoated region. The first composite layer may comprise a first imaginary division line, a second imaginary division line, and a third imaginary division line dividing the first composite layer into quarters along the length direction of the first substrate, and the middle uncoated region may be between the first imaginary division line and the third imaginary division line. The first division line may correspond to the approximately 1/4 point of the first composite layer, the second division line may correspond to the approximately 1/2 point of first composite layer, and the third division line may correspond to the approximately 3/4 point of the first composite layer along the length direction of the first substrate.

The first region and the second region may be in contact with each other. A length of the first region may be smaller than a length of the second region, and the length of the first region may correspond to at least three turns from the inner-side end. The length of the second region may be smaller than the length of the first region, and the length of the second region may correspond to at least three turns from the outer-side end.

An electrode assembly according to another embodiment includes a separator, a first electrode, and a second electrode. The first electrode and the second electrode are stacked and wound with the separator between the first electrode and the second electrode. The first electrode comprises a first substrate and a first composite layer, and the second electrode comprises a second substrate and a second composite layer. The first composite layer is divided into at least two regions along a length direction of the first substrate, and the second composite layer is divided into at least two regions along a length direction of the second substrate. At least two regions of the first composite layer have different active material compositions, and at least two regions of the second composite layer have different loading levels.

Each of the first substrate and second substrate may comprise an inner-side end and an outer-side end. A silicon content of the active material in at least two regions of the first composite layer may decrease in a direction toward the inner-side end. A loading level of the at least two regions of the second composite layer may decrease in the direction toward the inner-side end. The at least two regions of the first composite layer may comprise artificial graphite and natural graphite. A content of the artificial graphite may increase and a content of the natural graphite may decrease in the direction toward the inner-side end.

The at least two regions of the first composite layer may comprise a first region proximate to the inner-side end and a second region proximate to the outer-side end. The active material of the second region may contain natural graphite and less than approximately 10 wt% silicon. The active material of the first region may contain artificial graphite, and may not contain silicon, or may have a silicon content lower than that of the second region.

The first electrode may comprise a middle uncoated region between the first region and the second region and a first lead tab attached to the middle uncoated region of the first electrode. At least two regions of the second composite layer may comprise a third region corresponding to the first region and a fourth region corresponding to the second region. The second electrode may comprise a middle uncoated region between the third region and the fourth region and a second lead tab attached to the middle uncoated region of the second electrode.

The first composite layer may comprise a first imaginary division line, a second imaginary division line, and a third imaginary division line dividing first composite layer into quarters along the length direction of the first substrate, and the middle uncoated regions of the first electrode and the second electrode may be between the first imaginary division line and the third imaginary division line.

A rechargeable battery according to an embodiment comprises an electrode assembly, a can accommodating the electrode assembly and an electrolyte in an internal space of the can, and a cap assembly coupled to the can and seals the can. The electrode assembly comprises a first electrode and a second electrode stacked and wound with a separator therebetween, and comprises an inner winding part and an outer winding part surrounding the inner winding part. The inner-side end may be disposed at the inner winding part, the outer-side end may be disposed at the outer winding part.

The first electrode includes a first substrate and a first composite layer, and the second electrode includes a second substrate and a second composite layer. A silicon content of the first composite layer is lower in the inner winding part than in the outer winding part. A loading level of the second composite layer is lower in the inner winding part than in the outer winding part.

The first composite layer in the inner winding part may comprise artificial graphite, and the first composite layer in the outer winding part may comprise natural graphite. The rechargeable battery may further comprise a middle uncoated region between the inner winding part and the outer winding part, and a first lead tab and a second lead tab attached to the middle uncoated region. A first imaginary division line, a second imaginary division line, and a third imaginary division line may divide the first composite layer into quarters along a length direction of the first substrate, and the middle uncoated region may be between the first imaginary division line and the third imaginary division line.

A width of the inner winding part may be smaller than a width of the outer winding part, and the inner winding part may have a length corresponding to at least three turns. The middle uncoated region may be at the outer winding part, and the first lead tab and the second lead tab may be attached to the middle uncoated region. The width of the outer winding part may be smaller than the width of the inner winding part, and the outer winding part may have a length corresponding to at least three turns. The middle uncoated region may be at the inner winding part, and the first lead tab and the second lead tab may be attached to the middle uncoated region.

According to embodiments, it is possible to reduce volumetric changes of the inner winding part in the electrode assembly, and as a result, deformation of the inner winding part and the occurrence of cracks in the first and second substrates in the inner winding part may be suppressed or at least mitigated against. Therefore, it is possible to effectively suppress or at least mitigate an internal short circuit of the electrode assembly, and thereby reduce the risk of ignition of the rechargeable battery.

### BRIEF DESCRIPTION OF THE DRAWINGS

FIG. 1 is a schematic perspective view of an electrode assembly according to the first embodiment.
FIG. 2 is a schematic diagram illustrating a winding process of the electrode assembly shown in FIG. 1.
FIG. 3 is a top plan view illustrating an unfolded state of a first electrode and a second electrode of the electrode assembly shown in FIG. 1.
FIG. 4 is a cross-sectional view of the first electrode and the second electrode shown in FIG. 3.
FIG. 5 is a schematic cross-sectional view of the electrode assembly shown in FIG. 1.
FIGS. 6A to 6C are top plan views illustrating an unfolded state of the first electrode and the second electrode of the electrode assembly according to the second embodiment.
FIG. 7 is a top plan view illustrating an unfolded state of the first electrode and the second electrode of the electrode assembly according to the third embodiment.
FIG. 8 is a cross-sectional view of the electrode assembly according to the third embodiment.
FIG. 9 is a top plan view illustrating an unfolded state of the first electrode and the second electrode of the electrode assembly according to the fourth embodiment.
FIG. 10 is a cross-sectional view of the electrode assembly according to the fourth embodiment.
FIG. 11 is a top plan view illustrating an unfolded state of the first electrode and the second electrode of the electrode assembly according to the fifth embodiment.
FIG. 12 is a top plan view illustrating an unfolded state of the first electrode and the second electrode of the electrode assembly according to the sixth embodiment.
FIGS. 13 to 17 are top plan views illustrating other examples of the first electrode and the second electrode.
FIG. 18 is a graph illustrating the results of expansion rate experiments for three types of first electrode samples with different silicon contents in the active material.
FIG. 19 is a perspective view of a rechargeable battery according to an embodiment.
FIG. 20 is a cross-sectional view of the rechargeable battery shown in FIG. 19.

### DETAILED DESCRIPTION

the present invention will be described more fully hereinafter with reference to the accompanying drawings, in which embodiments of the invention are shown. As those skilled in the art would realize, the described embodiments may be modified in various different ways, all without departing from the scope of the present invention.

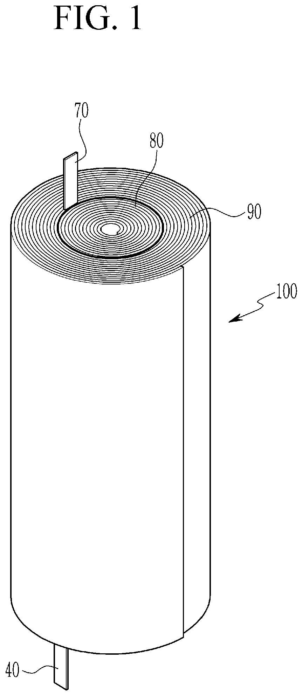

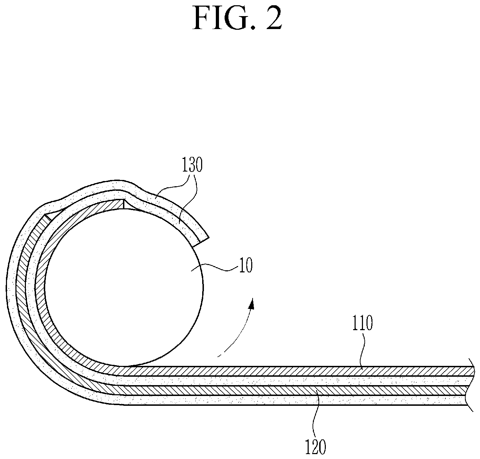

FIG. 1 is a schematic perspective view of an electrode assembly 100 according to the first embodiment, and FIG. 2 is a schematic diagram illustrating a winding process of the electrode assembly 100 shown in FIG. 1.

Referring to FIGS. 1 and 2, the electrode assembly 100 of the present embodiment may be a wound electrode assembly for a cylindrical battery. The electrode assembly 100 may include a first electrode 110 and a second electrode 120 stacked and wound with a separator 130 therebetween. Each of the first electrode 110, the second electrode 120, and the separator 130 may be a strip shape extending lengthwise along the winding direction.

The electrode assembly 100 may include the first electrode 110, the separator 130, the second electrode 120, and the separator 130 sequentially stacked and then wound round about a center pin 10. The first electrode 110 may be closer to the center pin 10 than the second electrode 120, but the arrangement of the first electrode 110 and the second electrode 120 is not limited to this embodiment. The center pin 10 may remain in the electrode assembly 100 or may be separated (e.g., removed) from the electrode assembly 100 after the electrode assembly 100 is wound.

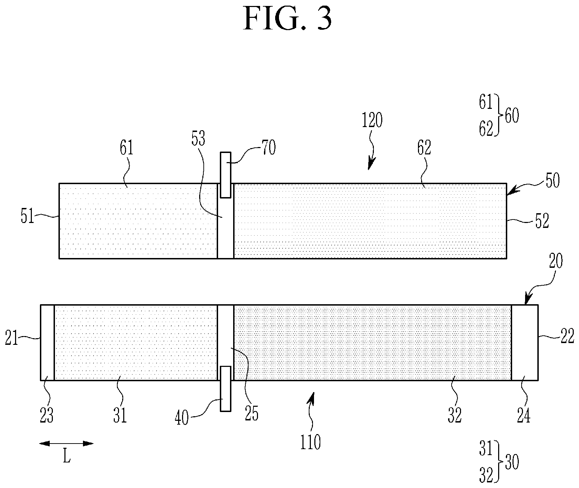

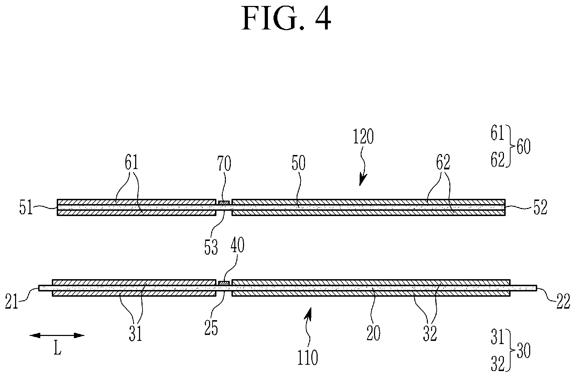

FIG. 3 is a top plan view illustrating an unfolded state of a first electrode 110 and a second electrode 120 of the electrode assembly 100 shown in FIG. 1, and FIG. 4 is a cross-sectional view of the first electrode 110 and the second electrode 120 shown in FIG. 3.

Referring to FIGS. 3 and 4, the first electrode 110 may include a first substrate 20, a first composite layer 30 on the first substrate 20, and a first lead tab 40 attached to the first substrate 20. The first composite layer 30 may be spaced apart by a predetermined distance from both ends of the first substrate 20 on each of the inner and outer surfaces of the first substrate 20.

The second electrode 120 may include a second substrate 50, a second composite layer 60 on the second substrate 50, and a second lead tab 70 attached to the second substrate 50. The second composite layer 60 may be in contact with both ends of the second substrate 50 on each of the inner and outer surfaces of the second substrate 50.

The inner surfaces of the first substrate 20 and the second substrate 50 are surfaces facing the center pin 10 or the winding center, and the outer surfaces of the first substrate 20 and the second substrate 50 are surfaces opposite the inner surfaces facing away from the center pin 10 or the winding center. The both ends of the first substrate 20 and the second substrate 50 are inner-side ends 21 and 51 and outer-side ends 22 and 52. The inner-side ends 21 and 51 are the ends on the side where winding begins and are at the winding center of the electrode assembly 100. The outer-side ends 22 and 52 are ends on the side where winding ends and are at the outermost part of the electrode assembly 100.

A length of the second electrode 120 may be shorter than a length of the first electrode 110, but the present disclosure is not limited to this embodiment. The inner-side end 21 of the first substrate 20 and the inner-side end 51 of the second substrate 50 may be spaced apart by a distance from each other along a winding direction. The outer-side end 22 of the first substrate 20 and the outer-side end 52 of the second substrate 50 may also be spaced apart at a distance from each other along the winding direction.

The first substrate 20 may be made of a thin metal plate with high electrical conductivity, for example, copper foil, copper mesh, nickel foil, or nickel mesh. The first composite layer 30 may include an active material, a conductive material, a binder, or the like, and may be manufactured through a slurry application, drying, and compression processes. The first substrate 20 is configured to provide a path for movement of charges generated in the first composite layer 30 and to support the first composite layer 30.

The active material of the first composite layer 30 may include a material configured to cause reversible intercalation and deintercalation of lithium ions, for example, a carbon-based material and silicon. The carbon-based material may include one or more of crystalline carbon and amorphous carbon, and may include one or more of natural graphite and/or artificial graphite. The first electrode 110 may be referred to as a negative electrode.

The second substrate 50 may be made of a thin metal plate with high electrical conductivity, for example, aluminum foil or aluminum mesh. The second composite layer 60 may include an active material, a conductive material, a binder, or the like, and may be manufactured through a slurry application, drying, and compression processes. The second substrate 50 is configured to provide a path for movement path of charges generated in the second composite layer 60 and to support the second composite layer 60.

The active material of the second composite layer 60 may include a compound configured to cause reversible intercalation and deintercalation of lithium, and may include one or more types of a composite oxide of a metal selected from cobalt, manganese, nickel, and combinations thereof, and lithium. In one or more embodiments, the active material of the second composite layer 60 may include transition metal oxides such as LiCoO₂, LiNiO₂, LiMn₂O₄, Li(NiCoAl)O₂, LiFePO₄, and/or Li(NiCoMn)O₂. The second electrode 120 may be referred to as a positive electrode.

During the charging and discharging process of the rechargeable battery, the active material of the first composite layer 30 reversibly intercalates and deintercalates lithium ions from the active material of the second composite layer 60, allowing current to flow to the external circuit. The first composite layer 30 undergoes a change in volume by expanding during charging and contracting during discharging, and the first substrate 20 supporting the first composite layer 30 also repeats contraction and expansion during the charging and discharging processes.

On each of the inner and outer surfaces of the first substrate 20, the first composite layer 30 may be divided into two regions along the length direction (L direction in FIG. 3) (winding direction) of the first substrate 20. The two regions may include a first region 31 proximate to the inner-side end 21 and a second region 32 proximate to the outer-side end 22. The active material composition of the first region 31 may be different from that of the second region 32.

In one or more embodiments, the active material of the first region 31 may not contain silicon, and the active material of the second region 32 may contain less than approximately 10 wt% of silicon. In one or more embodiments, the active material of both the first region 31 and the second region 32 may include silicon, but the silicon content of the first region 31 may be less than the silicon content of the second region 32. The silicon content of the second region 32 may be less than approximately 10 wt%.

Silicon is advantageous in increasing the capacity of rechargeable batteries, but it increases the contraction and expansion rate of the composite layer. If the active material of the second region 32 contains more than 10 wt% of silicon, the contraction and expansion rate of the second region 32 may become excessively large, and thus the active material of the second region 32 may contain less than 10 wt% of silicon. Due to the difference in silicon content between the first region 31 and the second region 32, the contraction and expansion rate of the first region 31 may be made smaller than that of the second region 32.

Additionally, the active material of the first region 31 and the active material of the second region 32 may include different types of graphite. In one or more embodiments, the active material of the first region 31 may include artificial graphite, and the active material of the second region 32 may include natural graphite. In one or more embodiments, the active material of the first region 31 may include silicon-free artificial graphite, and the active material of the second region 32 may include less than approximately 10 wt% of silicon and natural graphite.

In one or more embodiments, the active material of the first region 31 and the active material of the second region 32 may include both artificial graphite and natural graphite. But the content of artificial graphite in the active material of the first region 31 may be higher than the content of natural graphite, and the content of natural graphite in the active material of the second region 32 may be higher than the content of artificial graphite.

Artificial graphite is made by distilling and heat-treating coal tar from the steel production to create needle-shaped coke, grinding the needle-shaped coke, graphitizing the needle-shaped coke at high temperature, surface coating and de-ironing. Natural graphite is made by removing impurities from graphite mined from a mine, washing, dehydration, drying, and mixing to create round spherical graphite, coating the surface of the spherical graphite with pitch (a by-product of petroleum refining), and then firing it.

The contraction and expansion rate of the composite layer with a high content of natural graphite is higher than that of the composite layer with a high content of artificial graphite. Due to the difference in silicon content between the first region 31 and the second region 32, as well as the difference in characteristics between natural graphite and artificial graphite, the contraction and expansion rate of the first region 31 may be smaller than the contraction and expansion rate of the second region 32.

The first region 31 and the second region 32 may be spaced apart at a distance from each other. A portion of the first substrate 20 that is not covered by the first composite layer 30 may be referred to as an uncoated region. Three uncoated regions may be on each of the inner and outer surfaces of the first substrate 20. The three uncoated regions may be divided into an inner-side uncoated region 23 between the inner-side end 21 and the first region 31, an outer-side uncoated region 24 between the second region 32 and the outer-side end 22, and a middle uncoated portion 25 between the first region 31 and the second region 32. The first lead tab 40 may be attached to the middle uncoated region 25 and may protrude to one side (e.g., lower side) of the first electrode 110.

On each of the inner and outer surfaces of the second substrate 50, the second composite layer 60 may also be divided into two regions along the length direction (L direction in FIG. 3) (winding direction) of the second substrate 50. The two regions may include a third region 61 in contact with the inner-side end 51 and a fourth region 62 in contact with the outer-side end 52.

The active material composition of the third region 61 and the active material composition of the fourth region 62 may be substantially the same, and the loading level of the third region 61 may be lower than the loading level of the fourth region 62. The loading level is the weight (application amount) per unit area of the second composite layer 60. Due to the difference in loading levels between the third region 61 and the fourth region 62, the contraction and expansion rate of the third region 61 may be made smaller than that of the fourth region 62.

The third region 61 and the fourth region 62 may be spaced apart at a distance from each other. A portion of the second substrate 50 that is not covered by the second composite layer 60 may be referred to as an uncoated region. One middle uncoated region 53 may be on each of the inner and outer surfaces of the second substrate 50. The second lead tab 70 may be attached to the middle uncoated region 53 and may protrude to the other side (e.g., upper side) of the second electrode 120. That is, the first lead tab 40 and the second lead tab 70 may protrude to opposite sides.

Referring to FIGS. 1 to 4, the third region 61 may face the first region 31 with the separator 130 therebetween, and the fourth region 62 may face the second region 32 with the separator 130 therebetween. The middle uncoated region 53 of the second electrode 120 may face the middle uncoated region 25 of the first electrode 110 with the separator 130 therebetween.

To manufacture the first electrode 110, two types of first composite layer slurries with different active material compositions may be prepared, and the two types of first composite layer slurries may be divided into the first region 31 and the second region 32 and applied to create the first composite layer 30. To manufacture the second electrode 120, one type of second composite layer slurry may be prepared, and the second composite layer slurry may be applied at different loading levels in the third region 61 and the fourth region 62 to create the second composite layer 60.

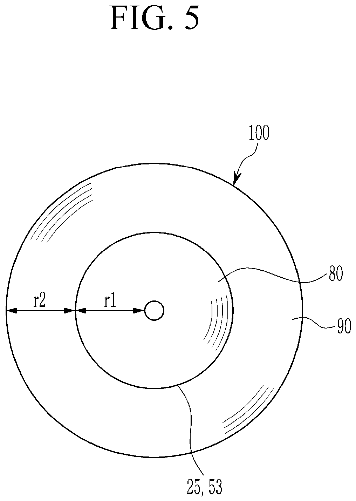

FIG. 5 is a schematic cross-sectional view of the electrode assembly shown in FIG. 1.

Referring to FIGS. 3 to 5, the electrode assembly 100 may include an inner winding part 80 including the first region 31 and the third region 61, and an outer winding part 90 including the second region 32 and the fourth region 62 while surrounding the inner winding part 80. The middle uncoated regions 25 and 53 may be between the inner winding part 80 and the outer winding part 90. A width r1 of the inner winding part 80 may be generally the same as or similar to a width r2 of the outer winding part 90. In one or more embodiments, the width r1 of the inner winding part 80 may be approximately 0.8 to approximately 1.2 times the width r2 of the outer winding part 90. As used herein, the widths r1 and r2 of the inner winding part 80 and the outer winding part 90 are widths measured along the radial direction of the electrode assembly 100.

The middle uncoated regions 25 and 53 of the first electrode 110 and the second electrode 120 may be at a position where the width r1 of the inner winding part 80 and the width r2 of the outer winding part 90 are generally or substantially equal. In the unfolded state of the first electrode 110 and the second electrode 120, the middle uncoated regions 25 and 53 may be closer to the inner-side ends 21 and 51 than the outer-side ends 22 and 52. In one or more embodiments, the length of the second region 32 along the length direction (L direction) of the first electrode 110 may be greater than the length of the first region 31, and the length of the fourth region 62 along the length direction (L direction) of the second electrode 120 may be greater than the length of the third region 61.

The electrode assembly 100 of the present embodiment may be configured to reduce the volumetric changes of the inner winding part 80 by lowering the contraction and expansion rates of the first region 31 and the third region 61. In addition, as the volumetric change of the inner winding part 80 decreases, deformation of the inner winding part 80 and cracks in the first and second substrates 20 and 50 disposed in the inner winding part 80 may be suppressed or at least mitigated. As a result, the electrode assembly 100 of the present embodiment may effectively suppress (or at least mitigate) internal short circuits and reduce the risk of ignition of the rechargeable battery.

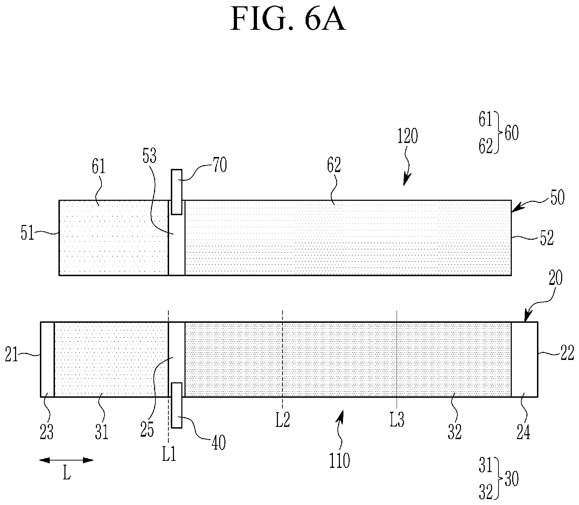

FIGS. 6A to 6C are top plan views illustrating an unfolded state of the first electrode and the second electrode of the electrode assembly according to the second embodiment. The electrode assembly of the second embodiment has the same or similar configuration as the first embodiment described above, except for the contents described below.

Referring to FIGS. 6A to 6C, there are imaginary lines dividing the first composite layer 30 into quarters along the length direction (L direction) of the first substrate 20. The imaginary lines may include a first division line L1 corresponding to the approximately 1/4 point, a second division line L2 corresponding to the approximately 1/2 point, and a third division line L3 corresponding to the approximately 3/4 point. The middle uncoated region 25 of the first electrode 110 may be between the first division line L1 and the third division line L3.

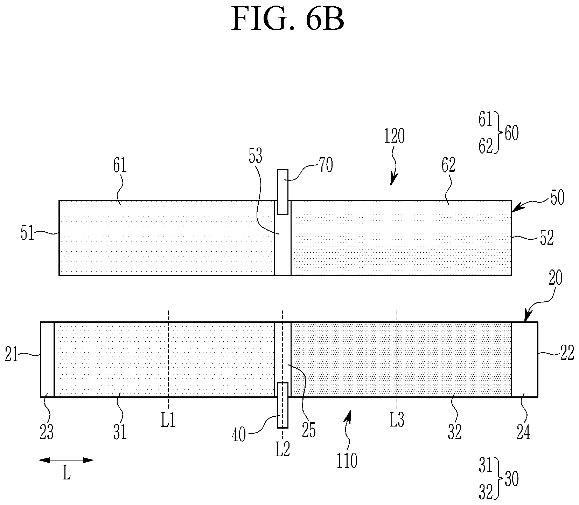

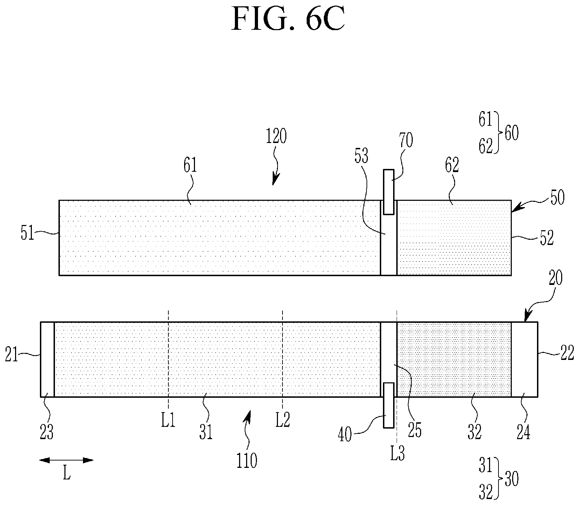

In FIG. 6A, the middle uncoated region 25 may be in contact with the first division line L1. In FIG. 6B, the middle uncoated region 25 may be at the second division line L2. In FIG. 6C, the middle uncoated region 25 may be in contact with the third division line L3. The middle uncoated region 53 of the second electrode 120 may be substantially at the same position as the middle uncoated region 25 of the first electrode 110 to face the middle uncoated region 25 of the first electrode 110.

If the middle uncoated regions 25 and 53, and the first and second lead tabs 40 and 70, were closer to the inner-side ends 21 and 51 than the first division line L1, or closer to the outer-side ends 22 and 52 than the third division line L3, the current movement path may become excessively long, resulting in reduced current collecting efficiency.

Additionally, when the electrode assembly forms a rechargeable battery together with a can and a cap plate, at least one of the first and second lead tabs 40 and 70 may interfere with other components, resulting in an internal short circuit.

In the electrode assembly of the present embodiment, the middle uncoated regions 25 and 53 and the first and second lead tabs 40 and 70 may be between the first and third division lines L1 and L3. In this embodiment, it is possible to increase current collection efficiency by shortening the current movement path, and prevent (or at least mitigate) an internal short circuit by preventing (or at least mitigating) at least one of the first and second lead tabs 40 and 70 from interfering with other components inside the rechargeable battery. In an embodiment in which the middle uncoated regions 25 and 53 and the first and second lead tabs 40 and 70 are at the second division line L2, the current movement path may be shortened to the greatest extent.

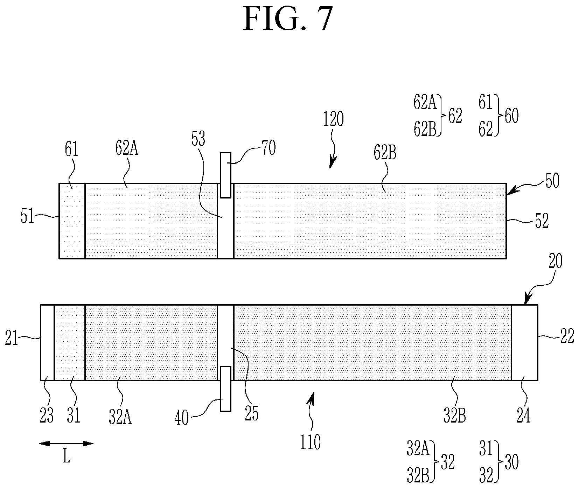

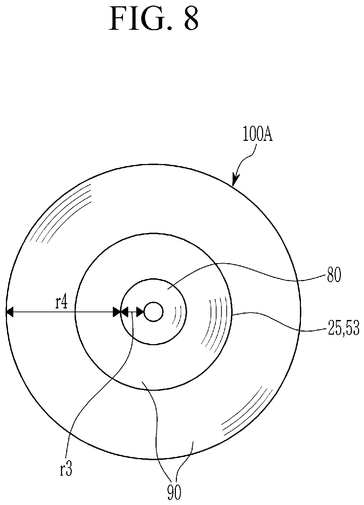

FIG. 7 is a top plan view illustrating an unfolded state of the first electrode and the second electrode of the electrode assembly according to the third embodiment, and FIG. 8 is a cross-sectional view of the electrode assembly according to the third embodiment. The electrode assembly of the third embodiment has the same or similar configuration as any of the first and second embodiments described above, except for the contents described below.

Referring to FIGS. 7 and 8, in the first electrode 110, the first region 31 and the second region 32 having different active material compositions may be in contact with each other. The second region 32 may be divided into an inner-side second region 32A and an outer-side second region 32B. The middle uncoated region 25 may be between the inner-side second region 32A and the outer-side second region 32B. The position of the middle uncoated region 25 may be the same as in either the first or second embodiments.

In the second electrode 120, the third region 61 and the fourth region 62 having different loading levels may be in contact with each other. The fourth region 62 may be divided into an inner-side fourth region 62A and an outer-side fourth region 62B. The middle uncoated region 53 may be between the inner-side fourth region 62A and the outer-side fourth region 62B. The middle uncoated region 53 may be at the same position as the middle uncoated region 25 of the first electrode 110 and face the middle uncoated region 25 of the first electrode 110.

An electrode assembly 100A may include the inner winding part 80 including the first region 31 and the third region 61, and the outer winding part 90 including the second region 32 and the fourth region 62. The width r4 of the outer winding part 90 may be larger than the width r3 of the inner winding part 80, and the middle uncoated regions 25 and 53 may be in the outer winding part 90.

The first region 31 and the third region 61 may have a length corresponding to at least three turns from the inner-side ends 21 and 51. If the first region 31 and the third region 61 had a length corresponding to less than three turns, the width r3 of the inner winding part 80 becomes excessively small, which has less effect on reducing the contraction and expansion rate of the electrode assembly, and thus may cause deformation due to volume change in the electrode assembly.

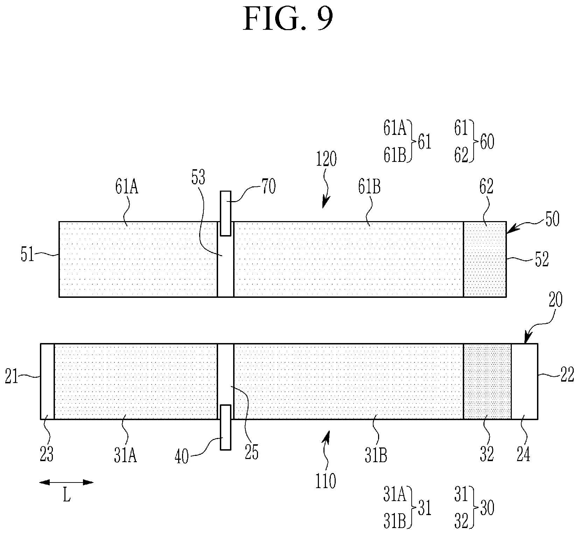

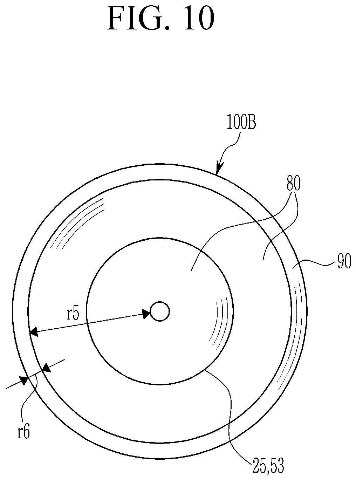

FIG. 9 is a top plan view illustrating an unfolded state of the first electrode and the second electrode of the electrode assembly according to the fourth embodiment, and FIG. 10 is a cross-sectional view of the electrode assembly according to the fourth embodiment. The electrode assembly of the fourth embodiment has the same or similar configuration as any of the first and second embodiments described above, except for the contents described below.

Referring to FIGS. 9 and 10, in the first electrode 110, the first region 31 and the second region 32 having different active material compositions may be in contact with each other. The first region 31 may be divided into an inner-side first region 31A and an outer-side first region 31B. The middle uncoated region 25 may be between the inner-side first region 31A and the outer-side first region 31B. The position of the middle uncoated region 25 may be the same as in either the first or second embodiments.

In the second electrode 120, the third region 61 and the fourth region 62 having different loading levels may be in contact with each other. The third region 61 may be divided into an inner-side third region 61A and an outer-side third region 61B. The middle uncoated region 53 may be between the inner-side third region 61A and the outer-side third region 61B. The middle uncoated region 53 may be at the same position as the middle uncoated region 25 of the first electrode 110 and face the middle uncoated region 25 of the first electrode 110.

An electrode assembly 100B may include the inner winding part 80 including the first region 31 and the third region 61, and the outer winding part 90 including the second region 32 and the fourth region 62. A width r5 of the inner winding part 80 may be larger than a width r6 of the outer winding part 90, and the middle uncoated regions 25 and 53 may be in the inner winding part 80.

The second region 32 and the fourth region 62 may have a length corresponding to at least three turns from the first region 31 and the third region 61. If the second region 32 and the fourth region 62 had a length corresponding to less than three turns, capacity degradation of the rechargeable battery may occur due to the low silicon content of the first composite layer and the low loading level of the second composite layer.

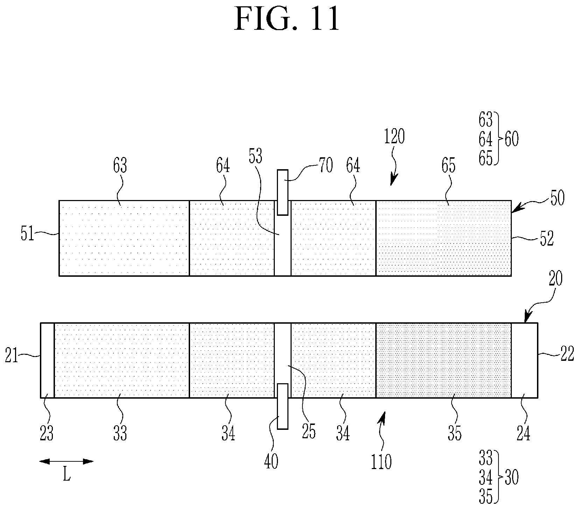

FIG. 11 is a top plan view illustrating an unfolded state of the first electrode and the second electrode of the electrode assembly according to the fifth embodiment. The electrode assembly of the fifth embodiment has the same or similar configuration as any of the first and second embodiments described above, except for the contents described below.

Referring to FIG. 11, the first composite layer 30 of the first electrode 110 may be divided into three or more regions along the length direction (L direction) of the first substrate 20, and the three or more regions may have different active material compositions. In FIG. 11, an embodiment in which the first composite layer 30 is divided into a fifth region 33, a sixth region 34, and a seventh region 35 is shown, but the number of divided regions is not limited to the illustrated embodiment.

In one or more embodiments, the active material of the fifth region 33 may not contain silicon, and the active material of the sixth region 34 and seventh region 35 may contain less than approximately 10 wt% of silicon, and the silicon content of the sixth region 34 may be less than the silicon content of the seventh region 35. In one or more embodiments, all of the fifth to seventh regions 33, 34, and 35 may contain silicon, but the silicon content of the fifth region 33 may be less than the silicon content of the sixth region 34, and the silicon content of the sixth region 34 may be less than the silicon content of the seventh region 35. In one or more embodiments, the closer the region is to the inner-side end 21, the smaller the silicon content may be.

Additionally, the region closer to the inner-side end 21 may have a higher artificial graphite content of the active material, and the region closer to the outer-side end 22 may have a higher natural graphite content of the active material. In one or more embodiments, the active material of the fifth region 33 may include artificial graphite, the active material of the sixth region 34 may include artificial graphite and natural graphite, and the active material of the seventh region 35 may include natural graphite.

Three or more regions may be in contact with neighboring regions along the length direction (L direction) of the first substrate 20, or may be spaced apart from each other with the middle uncoated region 25 therebetween. In FIG. 11, an embodiment in which the middle uncoated region 25 is in the sixth region 34 is shown. Due to the difference in the silicon content of the active material and the difference in the content of artificial graphite and natural graphite in the three or more regions described above, the contraction and expansion rate may be reduced as the region is closer to the inner-side end 21.

In the second electrode 120, the second composite layer 60 may also be divided into three or more regions along the length direction (L direction) of the second substrate 50, and the three or more regions may have different loading levels. In FIG. 11, an embodiment in which the second composite layer 60 is divided into a eighth region 63, a ninth region 64, and a tenth region 65 is shown, but the number of divided regions is not limited to the illustrated embodiment. The active material composition may be the same (or substantially the same) in the eighth region 63, the ninth region 64, and the tenth region 65, and the loading level may be lower in the region closer to the inner-side end 51.

Three or more regions may be in contact with neighboring regions along the length direction (L direction) of the second substrate 50, or may be spaced apart from each other with the middle uncoated region 53 therebetween. In FIG. 11, an embodiment in which the middle uncoated region 53 is in the ninth region 64 is shown. Due to the difference in loading levels in the three or more regions described above, the contraction and expansion rate may be reduced in the region closer to the inner-side end 51.

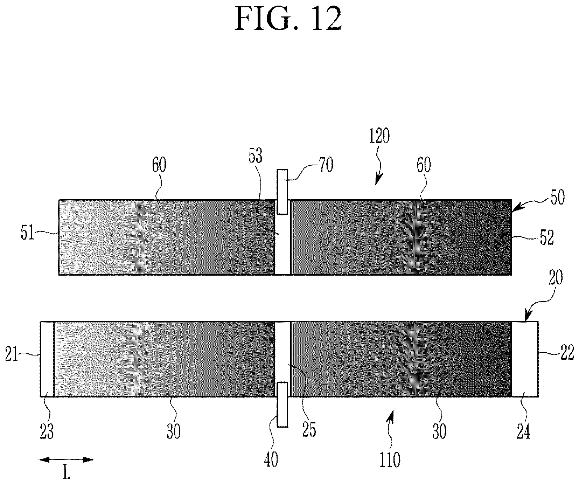

FIG. 12 is a top plan view illustrating an unfolded state of the first electrode and the second electrode of the electrode assembly according to the sixth embodiment. The electrode assembly of the sixth embodiment has the same or similar configuration as any of the first and second embodiments described above, except for the contents described below.

Referring to FIG. 12, the first composite layer 30 of the first electrode 110 may have a continuously changing composition of the active material along the length direction (L direction) of the first substrate 20. In one or more embodiments, the silicon content of the active material in the first composite layer 30 may gradually increase as the distance from the inner-side end 21 increases. The maximum silicon content of the active material may be less than approximately 10 wt%. In addition, the artificial graphite content of the active material in the first composite layer 30 may gradually decrease as the distance from the inner-side end 21 increases, and the natural graphite content of the active material in the first composite layer 30 may gradually increase as the distance from the inner-side end 21 increases.

In the second electrode 120, the second composite layer 60 may have a gradual change in the loading level along the length direction (L direction) of the second substrate 50. In one or more embodiments, the loading level of the second composite layer 60 may gradually increase as the distance from the inner-side end 51 increases. Due to the characteristics of the first composite layer 30 and the second composite layer 60 described above, the contraction and expansion rate may be reduced as the distance from the inner-side ends 21 and 51 decreases.

The first composite layer 30 may be divided into two regions by the middle uncoated region 25. The second composite layer 60 may also be divided into two regions by the middle uncoated region 53. The positions of the middle uncoated regions 25 and 53 may be the same as in either the first or second embodiments.

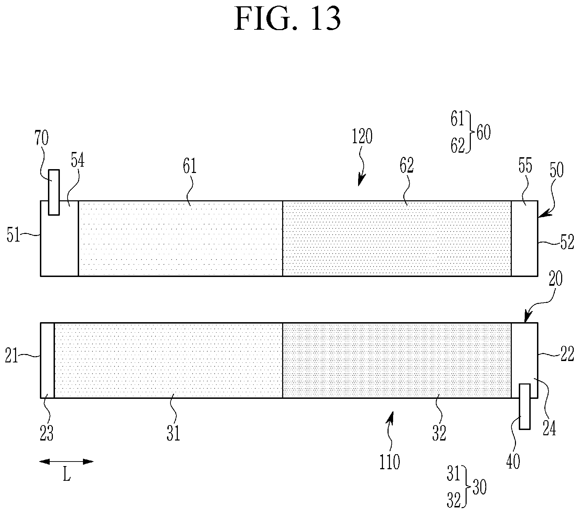

While the above-described embodiments describe embodiments in which one middle uncoated region 25 and 53 is on each of the first electrode 110 and the second electrode 120, a middle uncoated region may be omitted from at least one of the first and second electrodes, or a plurality of middle uncoated regions may be on the second electrode. FIGS. 13 to 17 are top plan views illustrating other embodiments of the first electrode and the second electrode.

In the embodiment shown in FIG. 13, each of the first electrode 110 and the second electrode 120 may include the inner-side uncoated regions 23 and 54 and the outer-side uncoated regions 24 and 55, and the middle uncoated region may be omitted. The first lead tab 40 may be on the outer-side uncoated region 24 of the first electrode 110. The second lead tab 70 may be on the inner-side uncoated region 54 of the second electrode 120.

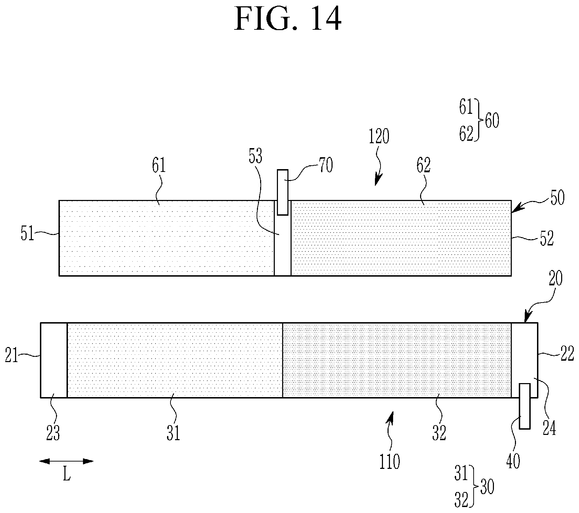

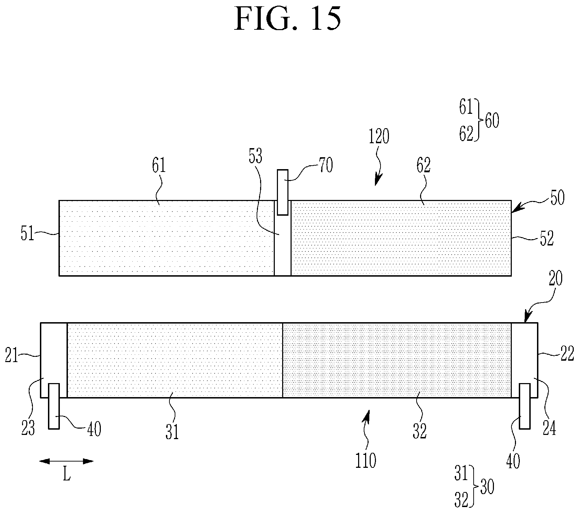

In the embodiment shown in FIGS. 14 and 15, the first electrode 110 may include the inner-side uncoated region 23 and the outer-side uncoated region 24, and the middle uncoated region may be omitted. The second electrode 120 may include one middle uncoated region 53. The first lead tab 40 may be on the outer-side uncoated region 24 of the first electrode 110 (see FIG. 14), or may be on each of the inner-side uncoated region 23 and the outer-side uncoated region 24 (see FIG. 15).

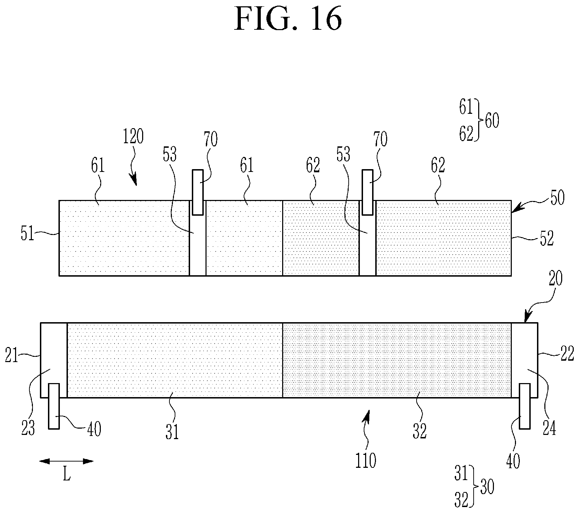

In the embodiment shown in FIG. 16, the first electrode 110 may include the inner-side uncoated region 23 and the outer-side uncoated region 24, and the middle uncoated region may be omitted. The second electrode 120 may include two middle uncoated regions 53. The first lead tab 40 may be on each of the inner-side uncoated region 23 and the outer-side uncoated region 24 of the first electrode 110. The second lead tab 70 may be on each of the two middle uncoated regions 53 provided on the second electrode.

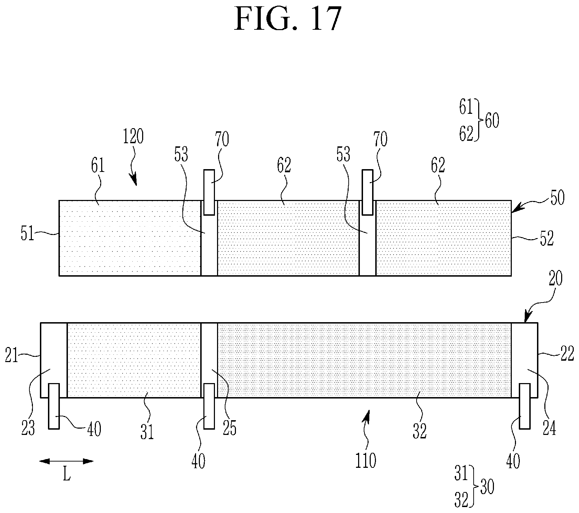

In the embodiment shown in FIG. 17, the first electrode 110 may include the inner-side uncoated region 23, the outer-side uncoated region 24, and the middle uncoated region 25. The second electrode 120 may include two middle uncoated regions 53. The first lead tab 40 may be in the middle uncoated region 25, and the two second lead tabs 70 may be in the two middle uncoated regions 53.

In all of the embodiments shown in FIGS. 13 to 17, the first composite layer 30 may be divided into a plurality of regions with different active material compositions, or may the active material composition may continuously change along the length direction. Additionally, in the second composite layer 60, the loading level may be divided into a plurality of regions, or the loading level may change continuously along the length direction. In FIGS. 13 to 17, it is shown that the first composite layer 30 is divided into the first region 31 and the second region 32, and the second composite layer 60 is divided into the third region 61 and the fourth region 62, but the present disclosure is not limited thereto.

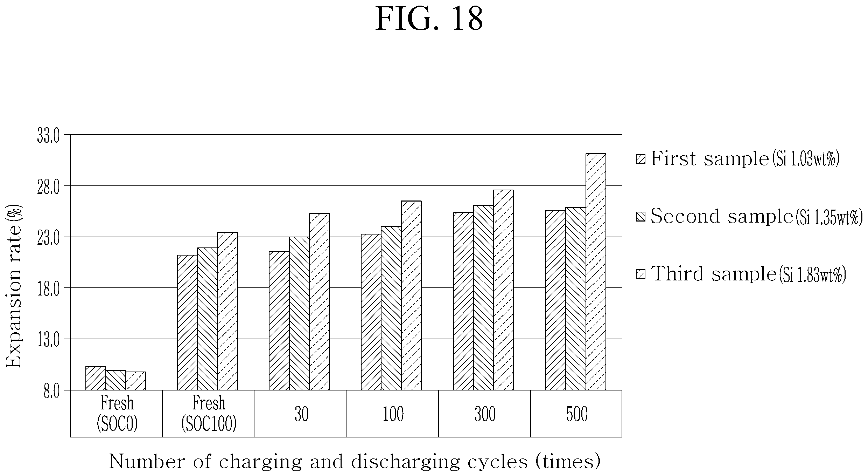

FIG. 18 is a graph illustrating the results of expansion rate experiments for three types of first electrode embodiments with different silicon contents in the active material. The three types of first electrode samples include a first sample with a silicon content of approximately 1.03 wt%, a second sample with a silicon content of approximately 1.35 wt%, and a third sample with a silicon content of approximately 1.83 wt%. Except for the silicon content, the active material composition of the first to third samples is the same (identical).

Referring to FIG. 18, it can be seen that all three types of the first electrode samples show a sharp increase in expansion rate when the state of charge (SOC) is 100 compared to when the SOC is 0, and the expansion rate gradually increases as the number of charging and discharging cycles increases. In all results shown in FIG. 13, the expansion rate is proportional to the silicon content. The electrode assemblies of the above-described embodiments may reduce the volume change of the inner winding part by differentiating the silicon content of the first composite layer active material along the length direction (winding direction) of the first electrode.

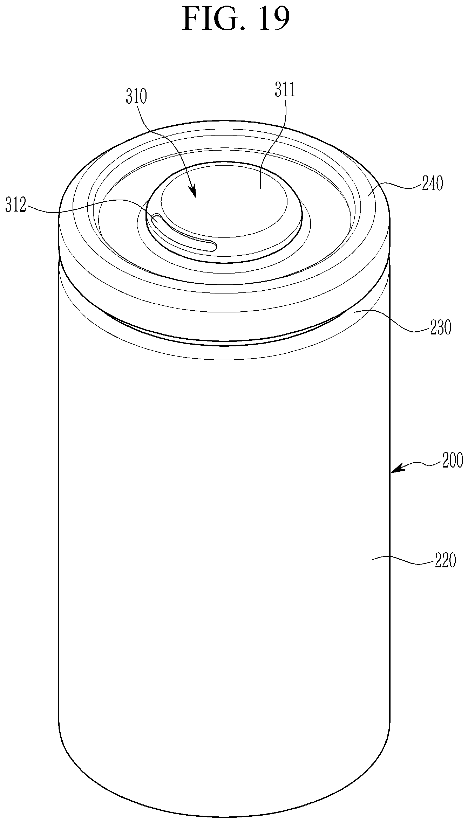

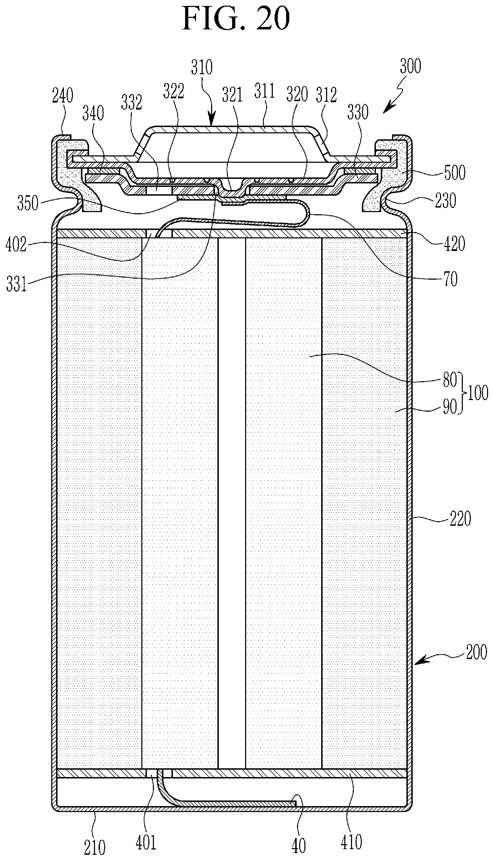

FIG. 19 is a perspective view of a rechargeable battery according to an embodiment, and FIG. 20 is a cross-sectional view of the rechargeable battery shown in FIG. 19.

Referring to FIGS. 19 and 20, the rechargeable battery of the present embodiment may include the electrode assembly 100, a can 200 accommodating the electrode assembly 100 together with an electrolyte, and a cap assembly 300 coupled to an open end of the can 200 to seal the can 200. The electrode assembly 100 is one of the electrode assemblies described above with reference to FIGS. 1 to 17.

The can 200 includes an open top to accommodate the electrode assembly 100. The can 200 may include a circular bottom portion 210 and a cylindrical side portion 220 connected to an edge of the bottom portion 210. The bottom portion 210 may be referred to as a top portion when the rechargeable battery is upside down. The can 200 may be made of, for example, stainless steel, aluminum, and/or aluminum alloy.

A first insulating plate 410 may be on the lower side of the electrode assembly 100, and a second insulating plate 420 may be on the upper side of the electrode assembly 100. The first lead tab 40 may be drawn out through a tab opening 401 in the first insulating plate 410 and coupled to the bottom portion 210 of the can 200. The second lead tab 70 may be drawn out through a tab opening 402 in the second insulating plate 420 and coupled to the cap assembly 300. In addition to the tab openings 401 and 402, the first and second insulating plates 410 and 420 may be provided with openings for electrolyte injection and openings for gas discharge.

A beading portion 230 and a crimping portion 240 may be on the side portion 220 of the can 200. The beading portion 230 is a recessed portion extending inward toward the inside of the can 200 and is configured to reduce the movement of the electrode assembly 100. The crimping portion 240 is a portion in which the opening end of the side portion 220 is vertically bent toward the inside of the can 200, and is configured to fix the cap assembly 300 together with the beading portion 230.

The cap assembly 300 may be fixed between the beading portion 230 and the crimping portion 240 by an insulating gasket 500 to seal the can 200. The cap assembly 300 may include a cap-up 310, a safety vent 320, a cap-down 330, an insulating member 340, and a sub-plate 350, but the present disclosure is not limited thereto, and numerous variations are possible.

The cap-up 310 may be at the uppermost side of the cap assembly 300. The cap-up 310 may include a terminal portion 311 that protrudes convexly upward and is connected to an external circuit, and an outlet port 312 configured to discharge gas may be around the terminal portion 311. The safety vent 320 may be below the cap-up 310. The safety vent 320 may include a protrusion 321 that protrudes convexly downward and is connected to the sub-plate 350, and at least one notch 322 around the protrusion 321.

Heat may be generated due to rapid charging and discharging or abnormal operation of the rechargeable battery, and the electrolyte may evaporate due to the heat, thereby generating gas. The protrusion 321 may be configured to deform upward in response to the internal pressure and to separate from the sub-plate 350, and the safety vent 320 may be configured to be cut along the notch 322. The cut safety vent 320 may prevent explosion of the rechargeable battery by releasing (discharging) gas to the outside.

The cap-down 330 may be below the safety vent 320. A first opening 331 for exposing the protrusion 321 of the safety vent 320 and a second opening 332 for discharging gas may be in the cap-down 330. The insulating member 340 has a circular ring shape and may be between the safety vent 320 and the cap-down 330.

The sub-plate 350 may be below the cap-down 330. The sub-plate 350 may be fixed to the lower surface of the cap-down 330 to block the first opening 331 of the cap-down 330, and the protrusion 321 of the safety vent 320 may be fixed to the sub-plate 350. The second lead tab 70, which is drawn out from the electrode assembly 100, may be fixed to the sub plate 350.

The can 200 is charged to the same polarity as the first electrode of the electrode assembly 100 by the first lead tab 40 and may function as a terminal (negative terminal) of the first electrode. The cap assembly 300 is charged to the same polarity as the second electrode of the electrode assembly 100 by the second lead tab 70 and may function as a terminal (positive terminal) of the second electrode. The can 200 and the cap assembly 300 are insulated from each other by the insulating gasket 500.

In the above-described rechargeable battery, the electrode assembly 100 is configured to reduce the volume change of the inner winding part 80. Reducing the volume change of the inner winding part 80 may prevent (or at least mitigate) an internal short circuit of the electrode assembly 100 by suppressing (or at least reducing) deformation of the inner winding part 80 and cracks in the substrates. Therefore, the safety of the rechargeable battery may be improved by lowering the risk of ignition due to an internal short circuit of the electrode assembly 100.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

## Claims

1. An electrode assembly (100, 100A, 100B), comprising:
a separator (130);
a first electrode (110); and
a second electrode (120);
wherein the first electrode (110) and the second electrode (120) are stacked and wound with the separator (130) between the first electrode (110) and the second electrode (120),
wherein the first electrode (110) comprises a first substrate (20) and a first composite layer (30) disposed on the first substrate (20),
wherein the first composite layer (30) is divided into at least two regions (31, 32) along a length direction of the first substrate (20), and
wherein the at least two regions (31, 32) of the first composite layer (30) have different active material compositions.

2. The electrode assembly (100, 100A, 100B) as claimed in claim 1, wherein:
the first substrate (20) comprises an inner-side end (21) and an outer-side end (22), and
a silicon content of the active material of the at least two regions (31, 32) decreases in a direction toward the inner-side end (21).

3. The electrode assembly (100, 100A, 100B) as claimed in claim 1 or 2, wherein:
the at least two regions (31, 32) comprises artificial graphite and natural graphite, and
wherein a content of the artificial graphite increases in the direction toward the inner-side end (21) and a content of the natural graphite decreases in the direction toward the inner-side end (21).

4. The electrode assembly (100, 100A, 100B) as claimed in claim 2 or 3, wherein:
the at least two regions (31, 32) comprise a first region (31) proximate to the inner-side end (21) and a second region (32) proximate to the outer-side end (22),
the active material of the second region (32) contains less than 10 wt% of silicon, and
the active material of the first region (31) does not contain silicon or contains a silicon content lower than that of the second region (32).

5. The electrode assembly (100, 100A, 100B) as claimed in claim 4, wherein:
the active material of the first region (31) comprises artificial graphite, and
the active material of the second region (32) comprises natural graphite.

6. The electrode assembly (100, 100A, 100B) as claimed in any of the preceding claims, further comprising a middle uncoated region (25) between the first region (31) and the second region (32), and
wherein the first electrode (110) comprises a first lead tab (40) attached to the middle uncoated region (25).

7. The electrode assembly (100, 100A, 100B) as claimed in claim 6, wherein:
the first composite layer (30) comprises a first imaginary division line, a second imaginary division line, and a third imaginary division line dividing the first composite layer (30) into quarters along the length direction of the first substrate (20), and
the middle uncoated region (25) is between the first imaginary division line and the third imaginary division line.

8. The electrode assembly (100, 100A, 100B) as claimed in any of claims 4 to 7, wherein:
the first region (31) and the second region (32) are in contact with each other,
a length of the first region (31) is smaller than a length of the second region (32), and
the length of the first region (31) corresponds to at least three turns from the inner-side end (21).

9. The electrode assembly (100, 100A, 100B) as claimed in any of claims 4 to 7, wherein:
the first region (31) and the second region (32) are in contact with each other,
a length of the second region (32) is smaller than a length of the first region (31), and
the length of the second region (32) corresponds to at least three turns from the outer-side end (22).

10. The electrode assembly (100, 100A, 100B) as claimed in any of the preceding claims, wherein:
the second electrode (120) comprises a second substrate (50) and a second composite layer (60),
the second composite layer (60) is divided into at least two regions (61, 62) along a length direction of the second substrate (50), and
the at least two regions (61, 62) of the second composite layer (60) have different loading levels.

11. The electrode assembly (100, 100A, 100B) as claimed in claim 10, wherein:
the second substrate (50) comprises an inner-side end (51) and an outer-side end (52), and
a loading level of the at least two regions (61, 62) of the second composite layer (60) decreases in the direction toward the inner-side end (51).

12. The electrode assembly (100, 100A, 100B) as claimed in claim 10 or 11, wherein:
the at least two regions (61, 62) of the second composite layer (60) comprise a third region (61) corresponding to the first region (31) and a fourth region (62) corresponding to the second region (32), and
the second electrode (120) comprises a middle uncoated region (53) between the third region (61) and the fourth region (62) and a second lead tab (70) attached to the middle uncoated region (53) of the second electrode (120).

13. A rechargeable battery, comprising:
an electrode assembly (100, 100A, 100B) as claimed in any of the preceding claims, the electrode assembly comprising an inner winding part (80) and an outer winding part (90) surrounding the inner winding part (80);
a can (200) accommodating the electrode assembly (100, 100A, 100B) and an electrolyte in an internal space of the can (200); and
a cap assembly (300) coupled to the can (200) and sealing the can (200),
wherein a silicon content of the first composite layer (30) is lower in the inner winding part (80) than in the outer winding part (90), and
wherein a loading level of the second composite layer (60) is lower in the inner winding part (80) than in the outer winding part (90).

14. The rechargeable battery as claimed in claim 13, wherein:
the first composite layer (30) in the inner winding part (80) comprises artificial graphite, and
the first composite layer (30) in the outer winding part (90) comprises natural graphite,
the electrode assembly (100, 100A, 100B) further comprising:
a middle uncoated region (25, 53) between the inner winding part (80) and the outer winding part (90); and
a first lead tab (40) and a second lead tab (70) attached to the middle uncoated region (25, 53),
wherein a first imaginary division line, a second imaginary division line, and a third imaginary division line divide the first composite layer (30) into quarters along a length direction of the first substrate (20), and
wherein the middle uncoated region (25, 53) is between the first imaginary division line and the third imaginary division line.

15. The rechargeable battery as claimed in claim 13 or 14**,** wherein:
a width of the inner winding part (80) is smaller than a width of the outer winding part (90),
the inner winding part (80) has a length corresponding to at least three turns,
a middle uncoated region (25, 53) is at the outer winding part (90), and
a first lead tab (40) and a second lead tab (70) are attached to the middle uncoated region (25, 53), and/or wherein:
a width of the outer winding part (90) is smaller than a width of the inner winding part (80),
the outer winding part (90) has a length corresponding to at least three turns,
a middle uncoated region (25, 53) is at the inner winding part (80), and
a first lead tab (40) and a second lead tab (70) are attached to the middle uncoated region (25, 53).
